Europäisches Patentamt

European Patent Office

Office européen des brevets

(19)

(11) Veröffentlichungsnummer : **0 014 938**
.B1

(12)
# EUROPÄISCHE PATENTSCHRIFT

(45) Veröffentlichungstag der Patentschrift :
01.09.82

(51) Int. Cl.³ : **H 02 H   3/347**

(21) Anmeldenummer : **80100696.6**

(22) Anmeldetag : **11.02.80**

(54) **Verfahren zur Überwachung von Leiterströmen auf einen Fehlerstrom und Anordnung zur Durchführung des Verfahrens.**

(30) Priorität : **23.02.79 DE 2907171**

(43) Veröffentlichungstag der Anmeldung :
**03.09.80 (Patentblatt 80/18)**

(45) Bekanntmachung des Hinweises auf die Patenterteilung : **01.09.82 Patentblatt 82/35**

(84) Benannte Vertragsstaaten :
**AT BE DE FR GB IT NL SE**

(56) Entgegenhaltungen :
**FR A 2 088 245**
**US A 3 772 569**
**US A 4 001 646**
**US A 4 159 499**

(73) Patentinhaber : **SIEMENS AKTIENGESELLSCHAFT**
**Berlin und München**
**Postfach 22 02 61**
**D-8000 München 22 (DE)**

(72) Erfinder : **Breimesser, Fritz, Dipl.-Ing.**
**Dompfaffstrasse 49**
**D-8520 Erlangen (DE)**

Imprimerie Jouve, 18, rue St-Denis, 75001 Paris, France

## Verfahren zur Überwachung von Leiterströmen auf einen Fehlerstrom und Anordnung zur Durchführung des Verfahrens

Die Erfindung bezieht sich auf ein Verfahren zur Überwachung von Leiterströmen auf einen Fehlerstrom, der die Vormagnetisierung eines Magnetkreises ändert, an dessen Sekundärwicklung eine Kapazität und ein Auslöser angeschlossen sind.

Elektrische Anlagen werden bekanntlich durch Fehlerstrom-Schutzschaltungen überwacht, bei denen die Leiter des zu schützenden Stromkreises durch den Ringkern eines Magnetkreises hindurchgeführt sind und als Primärwicklung dienen. Die Sekundärwicklung ist mit dem Auslöser eines Schalters der Anlage verbunden. Solche Fehlerstrom-Schutzschalter arbeiten nach dem Prinzip eines Differenztransformators. Im ungestörten Betrieb ist die Summe der Primärströme Null. Im Falle eines Isolationsfehlers fließt ein Fehlerstrom zur Erde und zum Sternpunkt des Transformators zurück. Bei periodischen Differenzströmen genügend hoher Amplitude im Primärkreis wird über den Ringkern aus einer hochpermeablen Legierung so viel Energie in den Sekundärkreis übertragen, daß ein mit einer Kapazität im Sekundärkreis angeordneter Auslöser anspricht, der im allgemeinen auf einen Leistungsschalter des Stromkreises einwirkt (GB-PS 1 359 714).

Wegen der Zunahme nichtlinearer Verbraucher in den Stromversorgungsnetzen können im Störungsfall auch Gleichströme auftreten. Der Erfindung liegt deshalb die Aufgabe zugrunde, Verfahrensschritte zur Überwachung von Leiterströmen auf einen Fehlerstrom anzugeben, mit denen auch nichtperiodische Differenzströme, insbesondere Gleichströme, erfaßt werden können.

Es ist ein Verfahren zur Messung einer mit einem Magnetkreis verketteten Stromdurchflutung bekannt, bei dem mittels einer mit dem Magnetkreis verketteten Detektionsstromdurchflutung eine zeitlich zyklische Magnetflußänderung und ein Meßsignal durch die von der Vormagnetisierung abhängigen Zeitintervalle bestimmt wird, die jeweils aus dem Sättingungszustand des Magnetkreises abgeleitet werden. Es wird die Differenz zwischen den Zeitintervallen bis zum Erreichen der positiven und der negativen Sättigung gebildet. Die Auslösung erfolgt in einer Einrichtung zur Durchführung dieses Verfahrens ausschließlich über eine Elektronik. Eine Störung dieser Elektronik verhindert somit die Funktion der Einrichtung. Bei der Anwendung dieses Verfahrens zur Überwachung einer Anlage mit einem Fehlerstrom-Schutzschalter wird der Sekundärkreis zwischen der Sekundärwicklung und dem Haltemagnetsystem aufgetrennt (DE-PS 2 550 060).

Die genannte Aufgabe wird nun mit einem Magnetkreis der eingangs genannten Art erfindungsgemäß dadurch gelöst, daß der Magnetkern des Magnetkreises jeweils abwechselnd durch Pulsfolgen von Magnetisierungspulsen schrittweise ummagnetisiert wird und daß ermittelt wird, bis zu welcher Pulszahl innerhalb der Pulsfolgen jeweils zu einem vorbestimmten Abtastzeitpunkt innerhalb der einzelnen Magnetisierungspulse die Pulshöhe einen einstellbaren Spannungssollwert überschreitet, und daß aus einer Änderung dieser Pulszahl ein Ausgangssignal abgeleitet wird. Ein Ausgangssignal kann vorzugsweise abgeleitet werden, sobald die Änderung der Pulszahl einen vorbestimmten sollwert überschreitet. Zweckmäßig kann die Änderung der Pulszahl über mehrere Pulsfolgen integriert werden. Ein Ausgangssignal kann ferner abgeleitet werden, sobald in zwei aufeinanderfolgenden Pulsfolgen die Differenz der Pulszahlen, bis zu denen die Pulshöhe den Spannungssollwert überschreitet, einen einstellbaren sollwert überschreitet. Die Zahl der Magnetisierungspulse einer Pulsfolge wird in Abhängigkeit von der zur Ummagnetisierung des Magnetkerns erforderlichen Pulszahl selbsttätig eingestellt.

Eine besonders vorteilhafte Ausführungsform einer Anordnung zur Durchführung des Verfahrens ist gekennzeichnet durch eine Elektronik, welche der Sekundärwicklung und der Kapazität parallelgeschaltet ist und die einen Pulserzeuger enthält, welcher der Sekundärwicklung jeweils abwechselnd Pulsfolgen von Magnetisierungspulsen mit vorbestimmter Anzahl in eines und in der entgegengesetzten Richtung liefert, und die mit einer Auswertung versehen ist, die jeweils die Pulszahl innerhalb der Pulsfolgen ermittelt, bis zu der in einem vorbestimmten Abtastzeitpunkt innerhalb des einzelnen Magnetisierungspulses die Pulshöhe einen einstellbaren Spannungssollwert überschreitet, und die aus der Änderung dieser Pulszahl ein Ausgangssignal ableitet und die mit einer Einrichtung zur Ablaufsteuerung versehen ist.

Der Auswertung ist wenigstens ein digitaler Sollwert für eine zulässige Änderung der Pulszahl vorgegeben. Die Elektronik kann zweckmäßig mit einer Einrichtung zur digitalen Integration der Änderungen der Pulszahlen über mehrere Pulsfolgen versehen sein. Die Eingangsleitungen der Auswertung enthalten jeweils einen Komparator zur Digitalisierung der Spannung an der Sekundärwicklung. Als Komparator kann vorzugsweise jeweils ein Logikelement vorgesehen sein, dessen interne Spannungsschwelle den Spannungssollwert bildet.

Die Anordnung zur Durchführung des Verfahrens bildet einen Fehlerstrom-Schutzschalter, der auch unäbhängig von der Elektronik arbeitet, d.h. seine Überwachungsfunktion bezüglich periodischer Differenzströme bleibt erhalten, wenn die Elektronik durch eine Störung ausfällt. Ein besonderer Vorteil der Anordnung besteht darin, daß als Elektronik ein Mikrocomputer eingesetzt werden kann, der die gesamte Ablaufsteuerung übernimmt. Er erzeugt die Pulsfolgen, von denen jeweils eine auf eine der Leitungen des Sekundärkreises gegeben wird. Er übernimmt auch die Einstellung der Pulszahlen und die Auswertung der Meßsignale. Er überprüft die Strom/Zeit-Charakteristik der Meßsignale und führt eine Selbstprüfung durch und bildet ein Auslösesignal für einen Hauptschalter der Anlage, sobald die Änderung der Pulszahl den eingestellten Sollwert überschreitet. Durch den Sollwert wird somit eine Totzone für die Fehlerstromüberwachung gebildet.

Die magnetische Erregung des Ringkerns durch die einzelnen Impulse wird zweckmäßig wesentlich größer gewählt als die Koerzitivkraft des Kernmaterials. Die Länge der einzelnen Impulse wird vorzugsweise wesentlich geringer gewählt als die umschaltzeit des Ringkerns.

Alle benötigten Digitalsignale in der erforderlichen zeitlichen Zuordnung werden in der Ablaufsteuerung erzeugt. Die Pulsfolgen können entsprechend ihrer Stromrichtung mit einer Gegentaktschaltung auf die Meßwicklung des Ringkerns gegeben werden. Ein Schwellwertschalter gibt Pulse an die Auswertung ab, solange die Spannungspulse an der Meßwicklung über dem Schwellwert liegen. Da die Polarität der Ausgangssignale sich auch bei wechselnder Stromrichtung nicht umkehrt, genügt ein Schwellwertschalter mit einer Polarität, beispielsweise ein Logik-Bauelement, sogenanntes Gatter, mit fest vorgegebenem Schwellwert, vorzugsweise ein ODER-Gatter.

Die Gegentaktschaltung, mit welcher der Ringkern angesteuert wird, entspricht den üblichen Ausgangsschaltungen, wie sie in der TTL-Technik (Transistor-Transistor-Logik) verwendet werden. Die Pulsdauer und die Lange der Impulsfolge können zweckmäßig so ausgelegt werden, daß der Ringkern ohne Vormagnetisierung nach etwa der Hälfte der Pulsfolge ummagnetisiert sein muß. Die Pulsfrequenz liegt im allgemeinen weit über der Netzfrequenz und kann beispielsweise etwa 1 bis 50 kHz, vorzugsweise etwa 5 kHz betragen. Eine Stabilisierung für die Frequenz des Oszillators, der die Pulsfolge liefert, ist nicht erforderlich. Das Material für die Ringkerne kann beispielsweise aus gesintertem Ferrit (Siferrit) bestehen. Außerdem kann auch ein Ringbandkern verwendet werden.

Die Auswertung des Zählerstandes kann in einer besonderen Ausführungsform einer Anordnung zur Durchführung des Verfahrens auf einfache Weise so erweitert werden, daß der zeitliche Verlauf des Differenzstromes beispielsweise über eine digitale Integration berücksichtigt wird. Damit kann die Auslösecharakteristik an vorbestimmte, geforderte Verläufe angepaßt werden.

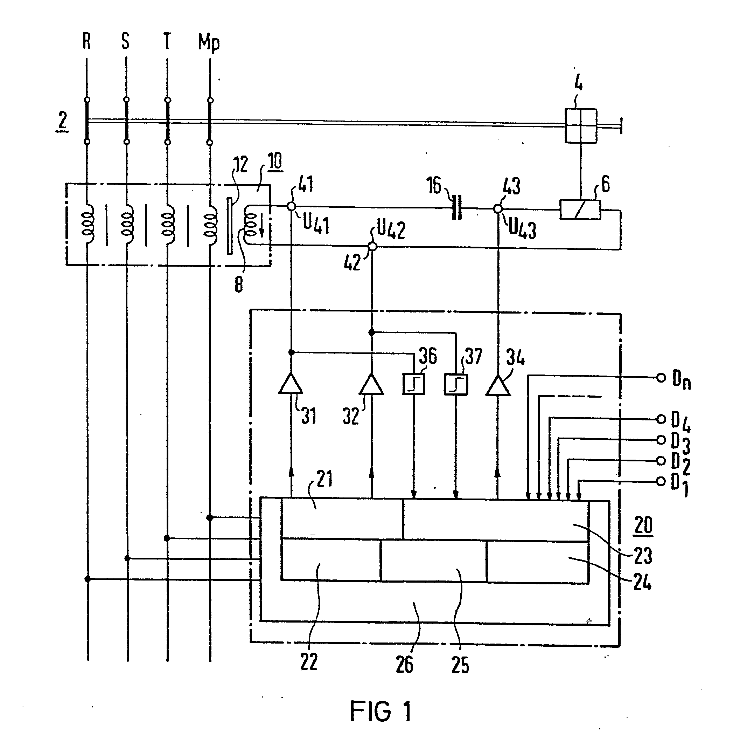

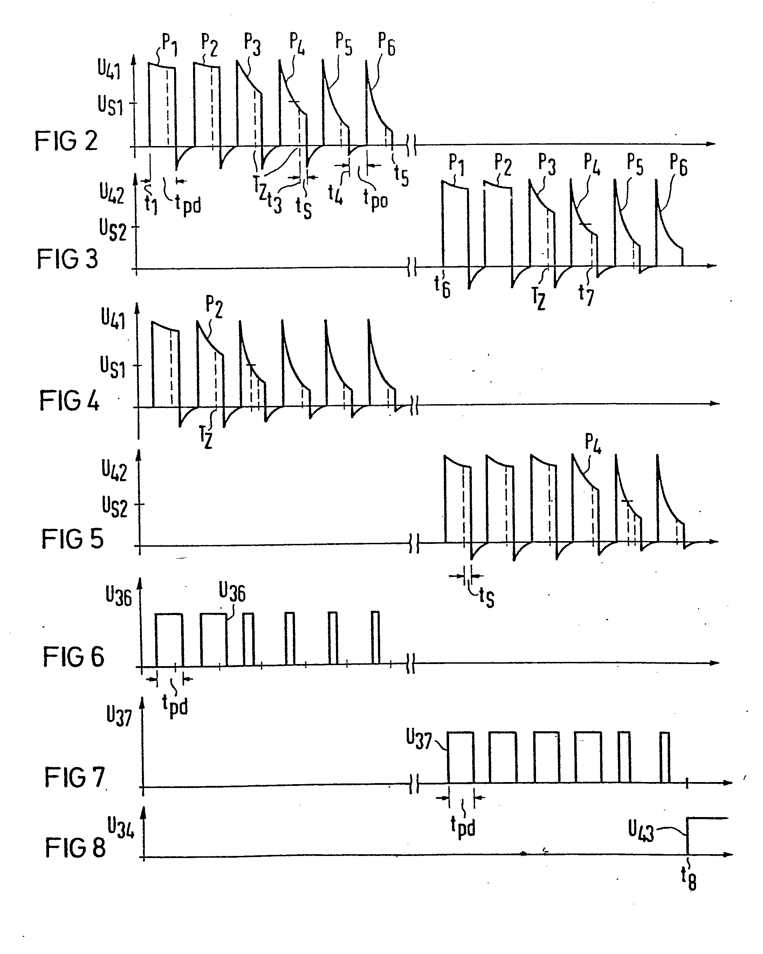

Zur weiteren Erläuterung der Erfindung wird auf die Zeichnung Bezug genommen, in deren Figur 1 eine Ausführungsform einer Anordnung zur Durchführung des Verfahrens schematisch veranschaulicht ist. In den Figuren 2 bis 8 ist die Wirkungsweise der Anordnung nach Figur 1 anhand verschiedener Diagramme veranschaulicht.

Nach Figur 1 enthält die Drehstromzuleitung einer Anlage, deren Phasen mit R, S und T und deren Mittelpunktleiter mit Mp bezeichnet sind, einen Leistungsschalter 2, dessen Schaltschloß mit 4 bezeichnet ist. Der zugehörige Auslöser 6 ist im Sekundärkreis eines Magnetkreises 10 angeordnet, dessen Magnetkern 12 in der Figur lediglich angedeutet ist. Als Magnetkern 12 kann vorzugsweise ein Ringbandkern mit flacher Hystereseschleife verwendet werden, durch den die Drehstromleiter als Primärleiter hindurchgeführt sind. Er ist mit einer Sekundärwicklung 8 versehen, an deren Anschlüsse 41 und 42 der Auslöser 6 in Reihe mit einer Kapazität 16 angeschlossen ist, die mit den Induktivitäten des Auslösers 6 und der Sekundärwicklung 8 einen Schwingkreis bildet.

An die Anschlüsse 41 und 42 und eine Klemme 43 ist eine Elektronik 20 angeschlossen, die somit sowohl der Sekundärwicklung 8 als auch der Kapazität 16 und dem Auslöser 6 parallelgeschaltet ist. Die Elektronik 20 enthält einen Pulserzeuger 21, eine Pulszahleinstellung 22, eine Auswertung 23, eine Einrichtung 24 zur digitalen Integration, eine Selbstprüfung 25 und eine Ablaufsteuerung 26. Sie kann vorzugsweise über zwei Treiber 31 und 32 an die Sekundärwicklung 8 angeschlossen sein. Der Auswertung 23 sind zwei Schwellwertschalter 36 und 37 vorgeschaltet. Sie gibt ihr Ausgangssignal $U_{43}$ an die Klemme 43, vorzugsweise ebenfalls über einen Treiber 34.

Die Elektronik 20 arbeitet als Digitalelektronik und ist mit einer Stromversorgung versehen, die in der Figur lediglich als Verbindungsleiter zu der Drehstrom-Eingangsleitung angedeutet ist. Der Treiber 34 legt während der Messung die Klemme 43 auf ein Potential, das so bemessen ist, daß in dem Schwingkreis kein Strom fließen kann, der zur Auslösung führt. Zur Betätigung des Auslösers 6 wird das Potential des Treibers 34 umgeschaltet.

Die über die Treiber 31 oder 32 übertragenen Meßsignale bestehen nach den Figuren 2 und 3 aus einer Folge von vorzugsweise wenigstens 100 pulsen, von denen zur Vereinfachung nur 6 dargestellt und jeweils mit $P_1$ bis $P_6$ bezeichnet sind. Da jeder Puls mit der Dauer $t_{pd}$ nur einen kleinen Beitrag zur Ummagnetisierung liefert, wird der Magnetkern 12 schrittweise ummagnetisiert. Die Länge der Pulspausen $t_{po}$ während der Impulsfolge wird so gewählt, daß der Schwingkreis aus der Kapazität 16 und der Induktivität des Auslösers 6 während der Meßzeit genügend stark bedämpft wird. Jeder der Pulse $P_1$ bis $P_6$ verschiebt die Magnetisierung des Magnetkerns 12 um einen kleinen Betrag auf der Kennlinie und in der Pause von $t_5$ bis $t_6$ zwischen den Pulsfolgen $U_{41}$ und $U_{42}$ kehrt der Magnetkern 12 in den Remanenzpunkt zurück.

Der Pulserzeuger 21 enthält eine übliche Gegentaktausgangsschaltung. Die Treiber 31 und 32 in den Ausgangsleitungen des Pulserzeugers 21 enthalten im allgemeinen Gatter für verhältnismäßig große Ströme, d.h. mit großem Ausgangsfächer (fan-out). Die Schwellwertschalter 36 und 37 in den Eingangsleitungen der Auswertung 23 dienen als Komparator und können beispielsweise Schmitttrigger sein. Die Auswertung 23 enthält außerdem vorzugsweise mehrere Eingänge zur Vorgabe von digitalen Sollwerten $D_1$ bis $D_n$, von denen in der Figur zur Vereinfachung nur die Sollwerte $D_1$, $D_2$, $D_3$, $D_4$ und $D_n$ angedeutet sind. Diese Sollwerte bilden für die Auswertung 23 und Selbstprüfung 25 sowie für die Einrichtung 24 zur digitalen Integration jeweils Toleranzgrenzen.

Zur Zeit $t_1$ erhält die Sekundärwicklung 8 nach Figur 2 über den Treiber 31 eine Pulsfolge $U_{41}$ von Pulsen $P_1$ bis $P_6$ mit vorbestimmter Richtung und wenigstens annähernd gleicher Größe, insbesondere gleicher Amplitude. Die Form der Pulsfolgen $U_{41}$ bzw. $U_{42}$ dient als Merkmal für die erfolgte Ummagnetisierung des Magnetkerns 12. Die Pulse $P_1$ bis $P_6$ fließen mit der in Figur 1 durch einen Pfeil angegebenen Richtung durch die Sekundärwicklung 8. Die Pulse $P_1$ bis $P_6$ werden über den Schwellwertschalter 37 der Auswertung 23 vorgegeben. Jeweils in einem vorbestimmten zeitlichen Abstand $t_a$ vor dem Ende jedes Pulses wird die Höhe des Pulses ausgewertet, und die Pulszahl $P_1$ bis $P_3$ erfaßt, bei der im Abtastzeitpunkt $T_z$ die Spannung der Pulsfolge $U_{41}$ einen einstellbaren Spannungssollwert $U_{S1}$ überschreitet. Der vierte Puls $P_4$ unterschreitet zur Zeit $t_3$ den am Schwellwertschalter 37 eingestellten Spannungssollwert $U_{S1}$. Zur Zeit $t_4$ ist der Magnetkern 12 vollständig ummagnetisiert und folgende Impulse bewirken somit keine weitere Magnetisierung. Zur Zeit $t_5$ ist die Pulsfolge $U_{41}$ beendet.

Zur Zeit $t_6$ erhält nach Figur 3 die Sekundärwicklung 8 eine neue Pulsfolge $U_{42}$ mit Pulsen $P_1$ bis $P_6$ entgegengesetzter Richtung. Entsprechend den Pulsfolgen $U_{41}$ wird auch bei den Pulsfolgen $U_{42}$ bis zum Puls $P_3$ im Abtastzeipunkt $T_z$ der eingestellte Spannungssollwert $U_{S2}$ überschritten. Im Puls $P_4$ wird zur Zeit $t_7$ der Spannungssollwert $U_{S2}$ nicht mehr erreicht. Mit dem Puls $P_5$ ist der Magnetkern 12 ummagnetisiert.

Im Falle einer Stromänderung, beispielsweise durch einen Fehlerstrom, erhält man eine Vormagnetisierung des Magnetkerns 12 durch den Fehlerstrom. Dadurch sind für die Magnetisierung des Magnetkerns 12 in einer Richtung weniger und entsprechend für die Magnetisierung in der anderen Richtung mehr Impulse erforderlich. Im Diagramm nach Figur 4 wird deshalb bei der Impulsfolge $U_{41}$ nur noch bis zum Puls $p_2$ im Abtastzeitpunkt $T_z$ der eingestellte Spannungssollwert $U_{S1}$ überschritten, während bei der folgenden Pulsfolge $U_{42}$ mit entgegengesetzter Richtung nach Figur 5 der Spannungssollwert $U_{S2}$ noch bis zum Puls $P_4$ überschritten wird.

Die Spannungssollwerte $U_{S1}$ und $U_{S2}$ nach den Figuren 2 bis 5 sind vorzugsweise gleich groß und im entsprechenden Schwellwertschalter 36 bzw. 37 fest eingestellt. Sobald diese Schwellwerte im Abtastzeitpunkt unterschritten werden, sperrt der Schwellwertschalter seinen Ausgang und die Auswertung 23 erhält somit nach Figur 6 nur zwei Pulse, deren Dauer der Breite $< t_{pd} >$ der Pulse $P_1$ und $P_2$ entspricht, während dementsprechend von der folgenden Pulsfolge $U_{37}$ vier Pulse mit der Dauer $t_{pd}$ vom Schwellwertschalter 37 übertragen werden. In der Auswertung 23 bildet ein Zähler die Differenz der Pulse, die bei fehlender Stromabweichung und deshalb symmetrischen Pulsfolgen $U_{41}$ bzw. $U_{42}$ nach den Figuren 2 und 3 Null ist. Sobald eine Stromabweichung und damit eine Vormagnetisierung des Magnetkerns 12 auftritt, dient die Differenz der Pulsfolgen $U_{36}$ und $U_{37}$ als Maß für den Differenzstrom beispielsweise den Fehlerstrom.

In der Auswertung 23 wird die Zahl der Pulse der Pulsfolgen $U_{36}$ und $U_{37}$ verglichen mit dem digitalen Sollwert $D_1$ und das Ausgangssignal $U_{43}$ gegeben, wenn die Differenz der Pulse der Pulsfolgen $U_{36}$ und $U_{37}$ den vorgegebenen Sollwert $D_1$ überschreitet. Mit einem Abfragepuls für die Auswertung 23 wird dann nach Ablauf jeder Prüfperiode geprüft, ob die zulässige Differenz der Zählimpulse überschritten worden ist. Ist dies der Fall, so wird nach Figur 8 das Ausgangssignal $U_{43}$ zur Zeit $t_8$ abgegeben. Es dient zur Anzeige einer Stromabweichung, die den eingestellten Sollwert $D_1$ überschritten hat, und beispielsweise als Signal für die Auslösung des Leitungsschalters 2 für eine Anlage verwendet werden kann.

Bei sehr großem Fehlerstrom mit entsprechender Änderung der Dauer $t_{pd}$ der Pulse der Pulsfolge $U_{36}$ bzw. $U_{37}$ kann das Ausgangssignal $U_{43}$ bereits nach wenigen Pulsen oder sogar nach dem ersten Puls der Pulsfolge $U_{41}$ bzw. $U_{42}$ sofort gegeben werden.

Die Größe der Magnetisierung durch die Pulsfolgen $U_{41}$ bzw. $U_{42}$ wird so gewählt, daß die magnetische Erregung des Magnetkerns 12 der Sekundärwickung 8 sehr viel größer ist als die Koerzitivkraft des Materials des Magnetkerns 12. Die Dauer $t_{pd}$ jedes der Einzelpulse der Pulsfolge $U_{41}$ wird sehr viel kleiner gewählt als die umschaltzeit des Magnetkerns 12. Die Dauer $t_{pd}$ kann vorzugsweise so gewählt werden, daß der Magnetkern 12 etwa nach der Hälfte der Pulse $P_1$ bis $P_6$ umgeschaltet ist.

Das Verfahren der schrittweisen Ummagnetisierung führt die Zeitmessungen auf das Zählen der Pulse der Pulsfolge $U_{41}$ bzw. $U_{42}$ zurück. Jede Pulsfolge besteht aus $n_p$ Pulsen, beispielsweise $n_p = 6$ Pulsen. Die Zeiten bis zum Erreichen der Sättigung werden durch Pulszahlen $n_{Ai}$, beispielsweise $n_{Ai} = 3$ Pulse nach Figur 2 bzw. 3, dargestellt, wobei $n_{Ai} \leq n_p$ ist. Dabei gilt $n_{Ai} \cdot t_{pd} =$ konstant für den Fall, daß keine Vormagnetisierung vorliegt. Der zulässige Grenzwert der Zeitdifferenz entspricht der Differenz der Pulszahlen.

Beim schrittweisen Ummagnetisieren erhält man ein Meßsignal mit einer vorbestimmten Spannungszeitcharakteristik, die sich mit zunehmender Sättigung ändert. Wegen des Innenwiderstandes des Pulserzeugers 21 wird der Magnetkern 12 mit einer Mischung aus Konstantspannungs- und Konstantstromspeisung angesteuert. Nach der Spitze jeweils am Pulsanfang fällt das Signal je nach dem erreichten Grad der Ummagnetisierung mehr oder weniger steil ab. Sobald der Magnetkern 12 die Sättigung erreicht hat, wird das Meßsignal zu einer Pulsfolge mit zeitlich kurzen Spitzen verformt. Aus der Form der Pulse läßt sich somit der Übergang in die Sättigung ableiten. Kurz vor dem Ende jedes Pulses wird zu einem vorbestimmten Abtastzeitpunkt $T_z$ das Meßsignal der Pulsfolge $U_{41}$ mit dem zugeordneten Schwellwertschalter 36, der als Komparator wirkt, abgetastet. Liegt es über dem vorgegebenen Spannungssollwert $U_{S1}$, so wird der Pulszähler um 1 erhöht. Am Ende der $n_p$-Ummagnetisierungspulse der Pulsfolge $U_{36}$ steht der Zähler dann auf dem Wert der Pulszahl $n_{Ai}$.

Die Pulszahlen können vorzugsweise in zwei Stufen zweimal pro Meßperiode ausgewertet werden. Jede Pulsfolge $U_{41}$ bzw. $U_{42}$ besteht in der praktischen Ausführungsform beispielsweise aus $n_p = 160$ Pulsen, von denen in den Figuren 2 bis 5 zur Vereinfachung nur jeweils 6 dargestellt sind. Ohne Fehlerstrom werden nach den Figuren 2 und 3 beispielsweise $n_{Ao} = 3$ Pulse gezählt. Der Arbeitsbereich der Auswertung 23 ist deshalb auf einen maximalen Fehlerstrom begrenzt, dem eine Abweichung $D_1 < (n_p - n_{Ao})$ entspricht. Zunächst wird geprüft, ob die Pulszahl innerhalb des Arbeitsbereichs liegt. Alle Pulszahlen, die nicht in das Intervall

$$(n_{Ao} - D_1) < n_{Ai} < (n_{Ao} + D_1)$$

fallen, werden als Auswirkung unzulässig großer Fehlerströme interpretiert und führen deshalb bereits nach einer halben Meßperiode zum Auslösen des Leistungsschalters 2.

In der zweiten Stufe kann geprüft werden, ob der Differenzbetrag der Pulszahlen des Pulsfolgen $U_{36}$ und $U_{37}$ für die beiden Magnetisierungsrichtungen einer Meßperiode die Ungleichung

$$/n_{A1} - n_{A2}/ < D_2$$

erfüllt, wobei $D_2$ den Grenzwert darstellt, der entsprechend dem gewünschten Ansprechwert des Fehlerstroms als Bruchteil des Nennstroms, beispielsweise $0,7 \times I_{\Delta N}$, vorgegeben wird. Der Ansprechwert ist innerhalb des Bereichs $D_2 < 2 \cdot D_1$ frei wählbar.

Durch die Auswertung der Differenz wird die Ansprechempfindlichkeit verdoppelt, weil sich die Abweichungen addieren und außerdem wird eine Verschiebung der Pulszahlen, die auf Driftprobleme, wie Temperaturgang und Alterung der Bauelemente beruhen und deshalb beide Pulsfolgen im gleichen Maße ändern, kompensiert.

Die Auswertung 23 spricht nach einer halben Meßperiode auf große Fehlerströme und nach einer vollen Meßperiode auf den eingestellten Sollfehlerstrom an, wobei die Form des Fehlerstroms beliebig ist. Darüber hinaus ermöglicht der Einsatz der Digitaltechnik ohne zusätzlichen hardware-Aufwand in die Auswertung 23 auch die Einristung 24 Integration zur einzubeziehen, mit der auch kleinere Fehlerströme, die aber über längere Zeit fließen, erfaßt werden können. Die gemessenen Differenzen werden dabei über mehrere Meßperioden integriert. Das Auslösekriterium bildet dann der Inhalt eines Integrators, der die Differenzen aufaddiert, die einen vorgegebenen Schwellwert $D_3 < D_2$ überschreiten.

Wenn die Auswertung 23 einen unzulässig hohen Fehlerstrom erkannt hat, wird nach Figur 8 das Ausgangssignal $U_{43}$ der Halteleitung über den Treiber 34 nach Figur 1 umgeschaltet. Damit fließt ein Strom durch den als Haltemagnet wirkenden Auslöser 6, der den magnetischen Kreis so schwächt, daß der Anker des Schaltschlosses 4 abfällt und den Leistungsschalter 2 mechanisch auslöst.

Die Ankopplung der Elektronik 20 an den Sekundärkreis des Magnetkerns 12 wird selbsttätig überwacht. Falls der Sekundärkreis unterbrochen wird, löst der Auslöser 6 bereits während einer Meßperiode aus. Leitungsunterbrechungen zum Sekundärkreis werden am Ende einer Meßperiode erkannt, da dann die gemessene Pulszahl der Pulsfolge $U_{36}$ bzw. $U_{37}$ gleich der Gesamtpulszahl der Pulsfolge $U_{41}$ bzw. $U_{42}$ ist und die Auswertung 23 dies als großen Fehlerstrom interpretiert. Für das Auslösen müssen zwei der drei Anschlußleitungen zwischen der Elektronik 20 und dem Fehlerstromschutzschalter ungestört sein. Das in der Sicherheitstechnik übliche « 2 von 3 »-Konzept wird somit ohne zusätzlichen Aufwand eingehalten.

Die Funktion der Elektronik wird mit der Selbstprüfung 25 überwacht. Durch die Selbstprüfung 25 wird die Dauer $t_{pd}$ der Pulsfolge $U_{41}$ bzw. $U_{42}$ verändert und es wird geprüft, ob die gemessene Pulszahl sich entsprechend verändert. Beispielsweise muß bei einer Verdoppelung der Pulsdauer die gemessene Pulszahl auf die Hälfte zurückgehen. Dabei bleibt das dynamische Gleichgewicht erhalten.

Nach der ersten Hälfte der Prüfperiode wird dann abgefragt, ob eine gemessene Pulszahl $n_{11}$ wenigstens annähernd die Hälfte der ursprünglichen Pulszahl $n_{Ao}$ beträgt. Nimmt man als Toleranzgrenze den Sollwert $D_4$, so muß bei richtiger Funktion die Ungleichung

$$/n_{11}/n_{Ao} - 1/2/ < D_4$$

erfüllt sein.

Nach der zweiten Hälfte der Prüfperiode wird die entsprechende Ungleichung für die zweite Pulsfolge überprüft.

Die Zeitverhältnisse und damit der Arbeitspunkt des Magnetkerns 12 werden konstantgehalten.

Die gleichstromempfindliche Anordnung wird mit einem Gleichfehlerstrom getestet. Beim Betätigen der Prüftaste muß die Elektronik 20 ansprechen und den Leistungsschalter 2 auslösen. Damit wird die Funktion sowohl der Elektronik 20 als auch der Mechanik des Haltemagnetsystems überprüft.

Beim Ausfall des nicht näher bezeichneten Netzes oder der Stromversorgung der Elektronik 20 spricht die Anordnung in bekannter Weise auf Wechselfehlerströme sowie solle und angeschnittene Halbwellenströme an. Mit dem Wiederkehren der Spannung übernimmt die Elektronik 20 wieder die Überwachung auf Fehlerströme.

In einer Vorbereitungsphase wird der Ringkern jeweils durch $n_{max} = P_1$ bis $P_5$ Pulse in jeder richtung einmal ummagnetisiert. Die Pulszahl $n_{max}$ kann vorzugsweise um etwa 20 % über den Erfahrungswerten von $n_p$ liegen. Dann werden die zum Umschalten nötigen Pulszahlen $n_{Al}$ ermittelt. Die Pulszahlen für eine Pulsfolge können nun mit $n_p > (n_{Al} + D_1)$ festgelegt werden. Nach der anschließenden Meßperiode findet die erste Differenzauswertung statt. Ab diesem Zeitpunkt ist die Elektronik 20 wirksam.

Bis auf die als Komparatoren wirkenden Schwellwertschalter 36 und 37 zur Digitalisierung der Meßsignale werden in der Anordnung nur digitale Komponenten verwendet. In der Blockschaltung nach Figur 1 verbinden die Treiber 31 und 32 sowie 34 und die beiden Schwellwertschalter 36 und 37 den impulsempfindlichen FI-Schalter mit der digitalen Elektronik 20. Deren im Blockschaltbild enthaltenen Funktionen lassen sich mit einem Mikrocomputer verwirklichen.

Der als Elektronik 20 dienende Mikrocomputer arbeitet die ihm vorgegebenen Programmpunkte nacheinander ab. Nach dem Start wird eine Einstellphase durchlaufen, in der die zum Umschalten nötigen Pulse $P_1$ bis $P_5$ ermittelt werden. Daran schließt sich eine Selbstprüfung und eine Schleife mit beispielsweise 25 Meßperioden an. Dann springt das Programm zurück zur Selbstprüfung. Dieser Ablauf wiederholt sich zyklisch, bis ein unzulässig hoher Fehlerstrom durch Überschreiten eines der eingestellten Sollwerte $D_1$, $D_2$ und $D_3$ oder ein Funktionsfehler mit den entsprechenden Sollwerten $D_1$ und $D_4$ erkannt wird. In diesen Fällen wird über den Treiber 34 der Leistungesschalter 2 ausgelöst.

Für die Anordnung genügt ein Einchip-Mikrocomputer. Das gesamte Programm einschließlich einer Tabelle für die Strom/Zeit-Charakteristik der Einnistung 24 zur digitalen Integration benötigt einen Speicher von nur 1 000 Worten (1 Kilobyte, PROM). Der Flächenbedarf für die gesamte Elektronik 20 ist kleiner als die Grundfläche des eingangs erwähnten Fehlerstrom-Schutzschalters.

Die Dauer $t_{pd}$ der Pulse kann durch Programm eingestellt werden und wird möglichst klein gewählt, um eine hohe Empfindlichkeit zu erreichen. Wird beispielsweise eine Dauer $t_{pd} = 16$ µs eingestellt und die Grenze des Arbeitsbereiches beispielsweise auf $D_1 = 16$ festgesetzt, so ergibt sich eine Pulszahl $n_p = 160$ Pulse. Die Dauer $t_{po}$ der Pulse kann beispielsweise 22 µs betragen. Mit diesen Werten wird eine Empfindlichkeit von etwa 0,5 Pulse/mA ermittelt. Für Gleich- und Wechselstrom unterscheidet sich die Empfindlichkeit nur wenig. Bei vorgegebener Pulsdifferenz in dem Bereich um 20 mA Fehlerstrom ist das Verhältnis von Gleichzu Wechselstrom > 0,8 : 1.

Bei dem Verfahren der schrittweisen Ummagnetisierung stehen die Empfindlichkeiten für Gleich- und Wechselstrom in einem festen Verhältnis zueinander, das von der Dauer der Pulsfolge und der Periodendauer eines Vollwellen-Fehlerstroms abhängt.

Das Verhältnis der Gleich- zur Wechselstromempfindlichkeit kann beispielsweise durch die Wahl der Treiberspannung eingestellt werden. Für sehr kurze Pulsfolgen geht es entsprechend dem Verhältnis von Spitzenzu Effektivwert des Vollwellenfehlerstroms gegen den Grenzwert $\sqrt{2}$.

●

**Ansprüche**

1. Verfahren zur Überwachung von Leiterströmen auf einen Fehlerstrom, der die Vormagnetisierung eines Magnetkreises (10) ändert, an dessen Sekundärwicklung (8) eine Kapazität (16) und ein Auslöser (6) angeschlossen sind, dadurch gekennzeichnet, daß der Magnetkern (12) des Magnetkreises (10) jeweils abwechselnd durch Pulsfolgen ($U_{41}$, $U_{42}$) von Magnetisierungspulsen ($P_1$ bis $P_6$) schrittweise ummagnetisiert wird und daß ermittelt wird, bis zu welcher Pulszahl ($P_1$ bis $P_3$) innerhalb der Pulsfolgen ($U_{41}$, $U_{42}$) jeweils zu einem vorbestimmten Abtastzeitpunkt ($T_Z$) innerhalb der einzelnen Magnetisierungspulse ($P_1$ bis $P_6$) die Pulshöhe einen einstellbaren Spannungssollwert ($U_{S1}$ bzw. $U_{S2}$) überschreitet, und daß aus einer Änderung dieser Pulszahl ($P_1$ bis $P_2$ bzw. $P_1$ bis $P_4$) ein Ausgangssignal ($U_{43}$) abgeleitet wird.

2. Verfahren nach Anspruch 1, dadurch gekennzeichnet, daß ein Ausgangssignal ($U_{43}$) abgeleitet wird, sobald die Änderung der Pulszahl ($P_1$ bis $P_3$) einen vorbestimmten Sollwert ($D_1$) überschreitet.

3. Verfahren nach Anspruch 1 oder 2, gekennzeichnet durch eine digitale Integration der Änderungen der Pulszahl über mehrere Pulsfolgen.

4. Verfahren nach einem der Ansprüche 1 bis 3, dadurch gekennzeichnet, daß ein Ausgangssignal ($U_{43}$) abgeleitet wird, sobald in zwei aufeinanderfolgenden Pulsfolgen ($U_{41}$, $U_{42}$) die Differenz der Pulszahlen, bis zu denen die Pulshöhe den Spannungssollwert ($U_{S1}$ bzw. $U_{S2}$) überschreitet, einen einstellbaren Sollwert ($D_2$) überschreitet.

5. Verfahren nach einem der Ansprüche 1 bis 4, gekennzeichnet durch eine selbsttätige Einstellung der Anzahl der Magnetisierungspulse ($P_1$ bis $P_6$) in Abhängigkeit von der zur Ummagnetisierung des Magnetkerns (12) erforderlichen Pulszahl.

6. Verfahren nach einem der Ansprüche 1 bis 5, gekennzeichnet durch eine Selbstprüfung (25) durch Änderung der Pulsdauer und Ermittlung der sich daraus ergebenden Pulszahl und Vergleich mit einem einstellbaren Sollwert ($D_4$).

7. Anordnung zur Durchführung des Ver-

# 0 014 938

fahrens nach einem der Ansprüche 1 bis 6, gekennzeichnet durch eine Elektronik (20), welche der Sekundärwicklung (8) und der Kapazität (16) parallelgeschaltet ist und die einen Pulserzeuger (21) enthält, welcher der Sekundärwicklung (8) jeweils abwechselnd Pulsfolgen ($U_{41}$, $U_{42}$) von Magnetisierungspulsen ($P_1$ bis $P_6$) mit vorbestimmter Anzahl in einer und in der entgegengesetzten Richtung liefert, und die mit einer Auswertung (23) versehen ist, die jeweils die Pulszahl ($P_1$ bis $P_2$ bzw. $P_1$ bis $P_4$) innerhalb der Pulsfolgen ($U_{41}$, $U_{42}$) ermittelt, bis zu der in einem vorbestimmten Abtastzeitpunkt ($T_z$) innerhalb des einzelnen Magnetisierungspulses ($P_1$ bis $P_6$) die Pulshöhe einen einstellbaren Spannungssollwert ($U_{S1}$ bzw. $U_{S2}$) überschreitet, und die aus der Änderung dieser Pulszahl ($P_1$ bis $P_3$) ein Ausgangssignal ($U_{43}$) ableitet und die mit einer Einrichtung zur Ablaufsteuerung (26) versehen ist.

8. Anordnung nach Anspruch 7, dadurch gekennzeichnet, daß der Auswertung (23) wenigstens ein digitaler Sollwert ($D_1$ bis $D_n$) für eine zulässige Änderung der Pulszahl ($P_1$ bis $P_3$) vorgegeben ist.

9. Anordnung nach Anspruch 7, dadurch gekennzeichnet, daß die Elektronik (20) mit einer Einrichtung (24) zur digitalen Integration der Änderungen der Pulszahlen über mehrere Pulsfolgen versehen ist.

10. Anordnung nach einem der Ansprüche 7 bis 9, dadurch gekennzeichnet, daß die Elektronik (20) mit einer Einrichtung zur selbsttätigen Pulszahleinstellung (22) versehen ist.

11. Anordnung nach einem der Ansprüche 7 bis 10, dadurch gekennzeichnet, daß die Elektronik (20) mit einer Einrichtung zur Selbstprüfung (25) versehen ist.

12. Anordnung nach einem der Ansprüche 7 bis 11, dadurch gekennzeichnet, daß Eingangsleitungen der Auswertung (23) jeweils einen Komparator (36 bzw. 37) zur Digitalisierung der Spannung an der Sekundärwicklung (8) enthalten.

13. Anordnung nach Anspruch 12, dadurch gekennzeichnet, daß als Komparator (36 bzw. 37) jeweils ein Logik-Bauelement vorgesehen ist, dessen interne Spannungsschwelle den Spannungssollwert ($U_{S1}$ bzw. $U_{S2}$) bildet.

14. Anordnung nach einem der Ansprüche 7 bis 13, dadurch gekennzeichnet, daß der Pulserzeuger (21) über eine Gegentaktschaltung mit digitalen Treiberstufen (31, 32) an die Sekundärwicklung (8) angeschlossen ist.

15. Anordnung nach einem der Ansprüche 7 bis 14, gekennzeichnet durch einen Mikrocomputer als Elektronik (20).

## Claims

1. A method of monitoring the currents in conductors to detect any fault current which changes the premagnetization of a magnetic circuit (10) having a secondary winding (8) connected to a capacitor (16) and a tripping device (6), characterised in that the magnetism of the magnetic core (12) of the magnetic circuit (10) is alternately reversed in steps by pulse trains ($U_{41}$, $U_{42}$) of magnetization pulses ($P_1$ to $P_3$), and means ascertain up to which pulse number ($P_1$ to $P_3$) within the pulse trains ($U_{41}$, $U_{42}$) the pulse magnitude exceeds an adjustable voltage theoretical value ($U_{S1}$ or $U_{S2}$ as the case may be), in each case at a predetermined sampling time ($T_z$) within the individual magnetization pulses ($P_1$ to $P_6$), and that an output signal ($U_{43}$) is derived from a change in this pulse number ($P_1$ to $P_2$ or $P_1$ to $P_4$ as the case may be).

2. A method as claimed in Claim 1, characterised in that an output signal ($U_{43}$) is derived as soon as the change of the pulse number ($P_1$ to $P_3$) exceeds a predetermined theoretical value ($D_1$).

3. A method as claimed in Claim 1 or 2, characterised by a digital integration of the change of the pulse number via a plurality of pulse trains.

4. A method as claimed in one of Claims 1 to 3, characterised in that an output signal ($U_{43}$) is derived as soon as the difference of the pulse numbers, up to which the pulse magnitude exceeds the voltage theoretical value ($U_{S1}$ or $U_{S2}$ as the case may be), overshoots an adjustable theoretical value ($D_2$) in two consecutive pulse trains ($U_{41}$, $U_{42}$).

5. A method as claimed in one of Claims 1 to 4, characterised by an automatic adjustment of the quantity of the magnetization pulses ($P_1$ to $P_6$) in dependence upon the pulse number required for the magnetic reversal of the magnetic core (12).

6. A method as claimed in one of Claims 1 to 5, characterised by automatic checking (25) by way of a change in the pulse duration and determination of the pulse number which results therefrom and comparison with an adjustable theoretical value ($D_4$).

7. A circuit arrangement for implementation of the method claimed in one of Claims 1 to 6, characterised by an electronic unit (20) in parallel to the secondary winding (8) and to the capacitor (16), which contains a pulse generator (21) which supplies the secondary winding (8) with pulse trains ($U_{41}$, $U_{42}$) of magnetization pulses ($P_1$ to $P_6$) with an alternately predetermined number in one and in the opposite direction, which electronic unit is provided with an analysis device (23) which ascertains the pulse number ($P_1$ to $P_2$ or $P_1$ to $P_4$ as the case may be) within the pulse trains ($U_{41}$, $U_{42}$) until which number the pulse magnitude overshoots an adjustable voltage theoretical value ($U_{S1}$ or $U_{S2}$ as the case may be) at a predetermined sampling time ($T_z$) within the individual magnetization pulse ($P_1$ to $P_6$), which derives an output signal ($U_{43}$) from the change of this pulse number ($P_1$ to $P_3$), and which is provided with an operation control device (26).

8. A circuit arrangement as claimed in claim 7, characterised in that the analysis device (23) is given at least one digital theoretical value ($D_1$ to

7

$D_n$) for a permissible change in the pulse number ($P_1$ to $P_3$).

9. A circuit arrangement as claimed in Claim 7, characterised in that the electronic unit (20) is provided with a device (24) for the digital integration of the changes in the pulse numbers via a plurality of pulse trains.

10. A circuit arrangement as claimed in one of Claims 7 to 9, characterised in that the electronic unit (20) is provided with a device for the automatic adjustment (22) of pulse numbers.

11. A circuit arrangement as claimed in one of Claims 7 to 10, characterised in that the electronic unit (20) is provided with a device for automatic checking (25).

12. A circuit arrangement as claimed in one of Claims 7 to 11, characterised in that input lines of the analysis device (23) respectively contain a comparator (36 or 37 as the case may be) for the digitalization of the voltage at the secondary winding (8).

13. A circuit arrangement as claimed in Claim 12, characterised in that a logic component whose internal voltage threshold forms the voltage theoretical value ($U_{S1}$ or $U_{S2}$ as the case may be) is respectively provided as comparator (36 or 37 as the case may be).

14. A circuit arrangement as claimed in one of Claims 1 to 13, characterised in that the pulse generator (21) is connected to the secondary winding (8) by means of a push-pull circuit comprising digital driver stages (31, 32).

15. A circuit arrangement as claimed in one of Claims 7 to 14, characterised by a micro-computer as electronic unit (20).

**Revendications**

1. Procédé pour contrôler des courants de conducteurs du point de vue d'un courant de défaut qui modifie la préaimantation d'un circuit magnétique (10) à l'enroulement secondaire duquel sont reliés un condensateur (16) et un déclencheur (6), caractérisé par le fait que l'aimantation du noyau magnétique (12) du circuit magnétique (10) est inversée pas-à-pas et alternativement par des trains d'impulsions ($U_{41}$, $U_{42}$) d'impulsions ou de pulsations d'aimantation ($P_1$ à $P_6$) et que l'on détermine jusqu'à quel indice de pulsations ($P_1$ à $P_3$) les trains d'impulsions ($U_{41}$, $U_{42}$), l'amplitude des pulsations dépasse, à un instant d'échantillonnage prédéterminé ($T_z$) se situant à l'intérieur des pulsations d'aimantation individuelles ($P_1$ à $P_6$), une valeur de consigne de la tension ($U_{S1}$, $U_{S2}$), et qu'à partir de la modification de cet indice de pulsations ($P_1$ à $P_2$ ou $P_1$ à $P_4$) on dérive un signal de sortie ($U_{43}$).

2. Procédé selon la revendication 1, caractérisé par le fait qu'un signal de sortie ($U_{43}$) est dérivé dès que la modification de l'indice de pulsations ($P_1$ à $P_3$) dépasse une valeur de consigne prédéterminée ($D_1$).

3. Procédé selon la revendication 1 ou 2, caractérisé par une intégration numérique, sur plusieurs trains d'impulsions, des modifications de l'indice des pulsations.

4. Procédé selon l'une des revendications 1 à 3, caractérisé par le fait qu'un signal de sortie ($Q_{43}$) est dérivé dès que dans les deux trains d'impulsion successifs ($U_{41}$, $U_{42}$) la différence des indices de pulsations, jusqu'à ceux pour lesquels l'amplitude des pulsations dépasse la valeur de consigne ou de tension ($U_{S1}$ ou $U_{S2}$), dépasse une valeur de consigne ($D_2$) réglable.

5. Procédé selon l'une des revendications 1 à 4, caractérisé par un réglage automatique du nombre de pulsations d'aimantation ($P_1$ à $P_6$) en fonction de l'indice de pulsations nécessaire pour inverser l'aimantation du noyau magnétique (12).

6. Procédé selon l'une des revendications 1 à 5, caractérisé par un contrôle automatique (25) par modification de la durée des impulsions et détermination de l'indice de pulsations qui en résulte et comparaison avec une valeur de consigne réglable ($B_4$).

7. Dispositif pour la mise en œuvre du procédé selon l'une des revendications 1 à 6, caractérisé par un agencement électronique (20) monté en parallèle sur l'enroulement secondaire (8) et sur un condensateur (16), et qui comporte un générateur d'impulsions (21) qui fournit à l'enroulement secondaire (8) des trains d'impulsions ($U_{41}$, $U_{42}$) de pulsations d'aimantation ($P_1$ à $P_6$) alternativement, et en nombre prédéterminé, dans un sens et dans le sens inverse, et qui est pourvu d'un évaluateur (23) qui détermine l'indice de pulsations ($P_1$ à $P_2$ ou $P_1$ à $P_4$), dans les trains d'impulsions ($U_{41}$, $U_{42}$) jusqu'à l'indice dans lequel, à un instant d'échantillonnage prédéterminé ($T_z$) des pulsations d'aimantation individuelles ($P_1$ à $P_6$), l'amplitude des pulsations dépasse une valeur de consigne réglable de la tension ($U_{S1}$ ou $U_{S2}$), et qui dérive un signal de sortie ($U_{43}$) à partir du changement de cet indice de pulsations ($P_1$ à $P_3$), et qui est pourvu d'un dispositif pour la commande séquentielle.

8. Dispositif selon la revendication 7, caractérisé par le fait que l'évaluateur ou dispositif d'évaluation (23) est prévu pour au moins une valeur de consigne numérique ($D_1$ à $D_n$) pour un changement admissible de l'indice de pulsations ($P_1$ à $P_3$).

9. Dispositif selon la revendication 7, caractérisé par le fait que l'agencement électronique (20) est pourvu d'un dispositif (24) pour l'intégration numérique, sur plusieurs trains d'impulsions, des changements des indices de pulsations.

10. Dispositif selon l'une des revendications 7 à 9, caractérisé par le fait que l'agencement électronique (20) est pourvu d'un dispositif pour le réglage automatique (22) de l'indice de pulsations.

11. Dispositif selon l'une des revendications 7 à 10, caractérisé par le fait que l'agencement électronique (20) est pourvu d'un dispositif pour le contrôle automatique (25).

12. Dispositif selon l'une des revendications 7 à 11, caractérisé par le fait que les lignes d'entrée du dispositif d'évaluation (23) comportent chacune un comparateur (36, 37) pour la numérisation de la tension aux bornes de l'enroulement secondaire (8).

13. Dispositif selon la revendication 12, caractérisé par le fait qu'il est prévu comme comparateur (36, 37) un composant logique dont le seuil de tension interne constitue la valeur de consigne de la tension ($U_{S1}$, $U_{S2}$).

14. Dispositif selon l'une des revendications 7 à 13, caractérisé par le fait que le générateur d'impulsions (21) est relié à l'enroulement secondaire (8) par l'intermédiaire d'un montage symétrique à étages d'attaque (31, 32).

15. Dispositif selon l'une des revendications 7 à 14, caractérisé par le fait que l'agencement électronique (20) est constitué par un microordinateur.

FIG 1

0 014 938

FIG 2

FIG 3

FIG 4

FIG 5

FIG 6

FIG 7

FIG 8

2